# EUROPÄISCHE PATENTANMELDUNG

(11) **EP 1 197 603 A1**
(43) Veröffentlichungstag der Anmeldung: **17.04.2002**
(21) Anmeldenummer: 00122039.1
(22) Anmeldetag: 11.10.2000
(51) Int. Cl.: E01F 9/06, B64F 1/20, F21V 21/00

(54) **Markierungselement für Fahrbahnen**

(71) Anmelder: D. Swarovski & Co., 6112 Wattens (AT)
(72) Erfinder: Forster, Michael, 6112 Wattens (AT)
(74) Vertreter: Hofinger, Engelbert, Dr.Dr.

(57) **Zusammenfassung**

Markierungselement für Fahrbahnen, mit einem Gehäuse, in welchem mindestens eine Lichtquelle (1) angeordnet ist, deren Licht durch eine mit der Fahrbahn bündige ebene Grenzfläche eines durchsichtigen Deckels (4) des Gehäuses (5) austritt, wobei das von der Lichtquelle kommende Licht durch mindestens eine Linse (3) abgelenkt wird und im Inneren des Deckels (4) unter einem Winkel zur Grenzfläche verläuft, welcher nahe dem Grenzwinkel für Totalreflexion liegt, und wobei die Lichtquelle (1) das Licht in einem Abstrahlkegel mit weniger als 45° Öffnungswinkel emittiert und die Linsen (3) mit dem Deckel (4) zu einer Einheit verbunden sind.

## Beschreibung

Die Erfindung bezieht sich auf ein Markierungselement für Fahrbahnen, mit einem Gehäuse, in welchem mindestens eine Lichtquelle angeordnet ist, deren Licht durch eine mit der Fahrbahn bündige ebene Grenzfläche eines durchsichtigen Deckels des Gehäuses austritt, wobei das von der Lichtquelle kommende Licht durch mindestens eine Linse abgelenkt wird und im Inneren des Deckels unter einem Winkel zur Grenzfläche verläuft, welcher nahe dem Grenzwinkel für Totalreflexion liegt.

Derartige Einrichtungen sind beispielsweise aus GB 966 357 A und EP 0 022 106 A1 bekannt. Ganz ähnlich aufgebaut sind die Einrichtungen nach US 3 096 024 A und DE 1 158 916. Diese unterscheiden sich lediglich dadurch, daß Reflektoren die Funktion der Linsen übernehmen.

Bei allein bekannten Einrichtungen wird das Licht bereits vor dem Eintritt in den durchsichtigen Deckel in eine Richtung gebracht, welche es im Inneren des Deckels beibehalten soll. Damit es am unteren Rand des Deckels zu keiner Ablenkung kommt, ist dieser daher jeweils derart abgestuft, daß jeder Lichtstrahl des auftreffenden parallelen Bündels ungebrochen durchtritt.

Ein Grund für die relativ aufwendigen Konstruktionen nach dem Stand der Technik dürfte darin liegen. daß dort versucht wird, das zunächst in alle Richtungen abgestrahlte Licht sofort zu parallelisieren. Die Erfindung geht hingegen von der Überlegung aus. daß eine wesentliche konstruktive Vereinfachung erzielt werden kann, wenn eine Lichtquelle mit kegeliger Abstrahlung verwendet wird, bei welcher das Licht entweder von vornherein gerichtet austritt oder durch geeignete Reflektoren usw. entsprechend umgelenkt wird. In diesem Fall läßt sich die komplizierte Ausbildung der Deckelunterseite vermeiden, indem die das Licht parallelisierenden Linsen mit dem Deckel verbunden werden.

Die Erfindung ist somit dadurch gekennzeichnet, daß die Lichtquelle das Licht in einem Abstrahlkegel mit weniger als 45° Öffnungswinkel emittiert, und daß die Linsen mit dem Deckel zu einer Einheit verbunden sind.

Einzelheiten der Erfindung werden anschließend anhand der Zeichnung erläutert. Diese zeigt vier verschiedene Ausführungsbeispiele, jeweils in einem Schnitt in der Austrittsebene der Lichtstrahlen.

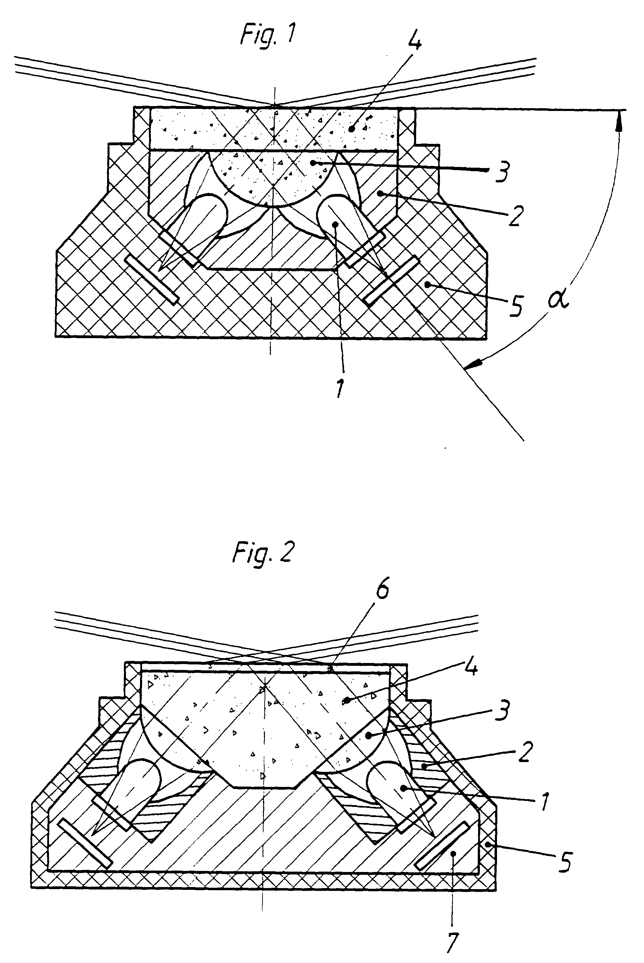

Beim Ausführungsbeispiel nach Fig. 1 werden als Leuchtdioden ausgebildete Lichtquellen 1 in einem Reflektorgehäuse 2 aus Aluminium oder Kunststoff gehalten. Das unter einem Öffnungswinkel von etwa 25° austretende Licht wird über die Linse 3 aus Glas oder Kunststoff größtenteils parallelisiert. Das Licht durchdringt die Deckplatte 4 und wird beim Austritt in die Luft vom Lot weg in Richtung eines horizontalen Austrittes gebrochen. Der zwischen der LED-Mittelachse und der horizontalen Austrittsebene eingeschlossene Winkel α liegt nahe dem Grenzwinkel zur Totalreflexion und wird bestimmt durch den Brechungsindex des Linsen- und Deckplattenmaterials. Die Deckplatte 4 kann sowohl aus Glas als auch aus PMMA oder Polycarbonat gefertigt werden. Im Falle einer Kunststoffausführung ist eine Kratzfestbeschichtung oder ein dünnes Glaslaminat 6 vorgesehen (wie in Fig. 2 eingezeichnet). Zur elektrischen und klimatischen Abdichtung ist das gesamte Modul in ein elastomeres Gehäuse 5 eingegossen, welches neben der Isolierung auch Dämpfungsfunktion hat.

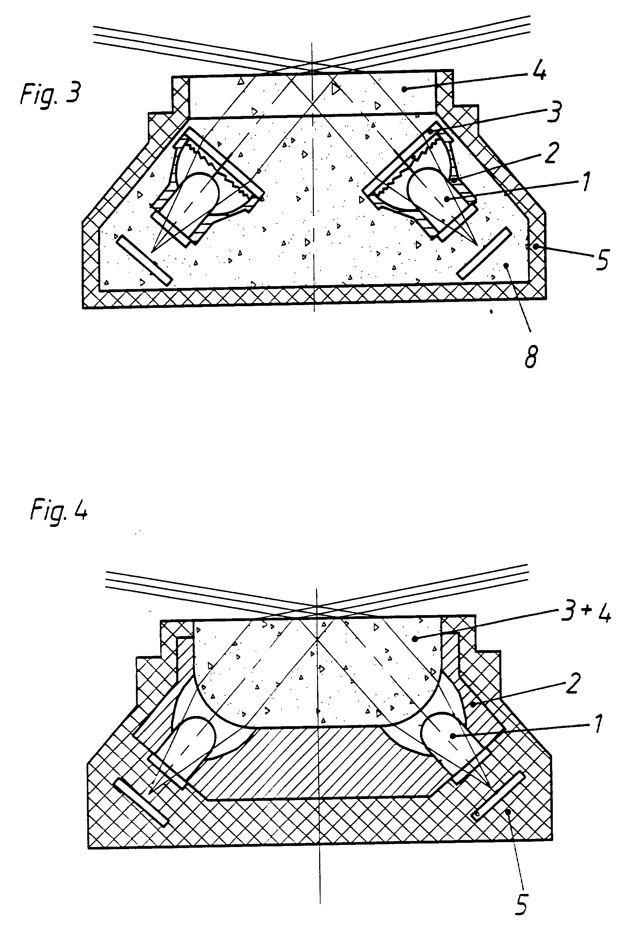

Die Ausführung nach Fig. 2 unterscheidet sich von jener nach Fig. 1 dahingehend, daß die Deckplatte 4 so ausgeformt ist. daß die Linse 3 vollständig in einem Reflektorgehäuse 2 aufgenommen wird, was eine spritzgießtechnische Herstellung des Gehäuses ermöglicht. Die Linse könnte auch, wie in Fig. 3 dargestellt, als Fresnellinse ausgeführt sein. Anschließend wird die Linsenoberfläche mit der Deckplatte elastisch verklebt. Soll die Deckplatte 4 ein Kunststoffteil sein, muß wieder ein Glaslaminat 6 als Kratzfestbeschichtung vorgesehen werden. Um die Konstruktion druckfest zu gestalten, wird der untere Bereich mittels nicht transparentem Material 7 vergossen und wiederum mittels eines elastomeren Gehäuses 5 umschlossen.

Die Ausführung nach Fig. 3 ist dadurch gekennzeichnet, daß die LED's 1 mit Reflektor 2 und Linse 3 verklebt werden und anschließend in einem transparenten Gießharz 8 (z.B. PU-Gießharz) eingegossen werden. Die Deckplatte 4 wird anschließend mit dem Modul elastisch verklebt und im Gehäuse 5 vergossen.

Die Ausführung nach Fig. 4 ist dadurch gekennzeichnet, daß die Linse 3 und die Deckplatte 4 in einem Teil gefertigt sind, um thermische Spannungen in der Fuge zwischen Linse und Deckplatte auszuschließen. Der Nachteil liegt in der komplizierten Herstellung des Teils. Um den Teil 3 + 4 statisch optimal zu unterstützen, ist auch das Reflektorgehäuse 2 aus einem Stück gefertigt. Das gesamte Modul wird wiederum mit einem Gehäuse 5 umgossen.

Ein besonderer Vorteil aller dargestellten Markierungselemente liegt in der niedrigen Bauhöhe, was sich nicht nur auf die Herstellungskosten des Elementes selbst, sondern insbesondere auf die Kosten der Installation auswirkt. Die geringe Bauhöhe erfordert kein vollständiges Durchstoßen der Fahrbahndecke, was dazu führt, daß der Einsatz in frostgefährdeten Gebieten vereinfacht oder erst ermöglicht wird.

Dadurch daß die Linsen 3 mit dem Deckel 4 zu einer Einheit verbunden, wenn nicht überhaupt einstückig mit diesem gefertigt sind, ist die optische Qualität des Systems sehr hoch, da jeder Übergang des Lichtes von einem Medium zu anderen mit Verluststrahlungen behaftet ist, selbst wenn die Eintrittsfläche nahezu normal auf die Lichteintrittsrichtung steht.

## Patentansprüche

1. Markierungselement für Fahrbahnen, mit einem Gehäuse, in welchem mindestens eine Lichtquelle angeordnet ist, deren Licht durch eine mit der Fahrbahn bündige ebene Grenzfläche eines durchsichtigen Deckels des Gehäuses austritt, wobei das von der Lichtquelle kommende Licht durch mindestens eine Linse abgelenkt wird und im Inneren des Deckels unter einem Winkel zur Grenzfläche verläuft, welcher nahe dem Grenzwinkel für Totalreflexion liegt, **dadurch gekennzeichnet, daß** die Lichtquelle (1) das Licht in einem Abstrahlkegel mit weniger als 45° Öffnungswinkel emittiert, und daß die Linsen (3) mit dem Deckel (4) zu einer Einheit verbunden sind.

2. Markierungselement nach Anspruch 1, **dadurch gekennzeichnet, daß** die Lichtquelle (1) mindestens eine Leuchtdiode umfaßt.

3. Markierungselement nach Anspruch 1 oder 2, **dadurch gekennzeichnet, daß** der Durchmesser der Linsen (3) mindestens so groß ist wie der des Abstrahlkegels der Lichtquelle (1).

4. Markierungselement nach einem der Ansprüche 1 bis 3, **dadurch gekennzeichnet, daß** die Linsen (3) mit einem die Lichtquelle (1) umgebenden Reflektorgehäuse (2) verbunden sind.

5. Markierungselement nach Anspruch 4, **dadurch gekennzeichnet, daß** die Linsen (3) samt dem Reflektorgehäuse (2) in ein durchsichtiges Medium (8) eingegossen sind, welches sie mit dem Deckel (4) zu einer Einheit verbindet.
